# EUROPEAN PATENT APPLICATION

(11) **EP 4 550 197 A1**
(43) Date of publication of application: **07.05.2025**
(21) Application number: 23306895.6
(22) Date of filing: 31.10.2023
(51) Int. Cl.: G06F 30/13, G06F 30/17, G06F 30/20, F01K 23/10, E04H 5/02, G06F 111/20, G06F 113/14, G06F 119/06, G06F 119/08

(54) **SYSTEMS AND METHODS FOR AUTOMATED GENERATION OF THREE-DIMENSIONAL (3D) MODELS FOR HEAT RECOVERY STEAM GENERATOR (HRSG)**

(71) Applicant: General Electric Technology GmbH, 5400 Baden (CH)
(72) Inventor: KANUGOVI, Ramarao, 5400 Baden (CH); LAKSHMANAN, Saravanan, 570027 Electronics City, Mysuru (IN); CHATEAU, Matthieu, 5400 Baden (CH); MEDDING, Jonathan Aaron, 5400 Baden (CH); BASA, Kiran Kumar, 201304 Noida (IN); KUMAR, Vipin, 201304 Noida (IN)
(74) Representative: Casalonga

(57) **Abstract**

A method of designing a heat recovery steam generator (HRSG) includes receiving, via a processor, a design input file comprising a plurality of parameters associated with a plurality of components for an HRSG model and receiving an indication of selecting an object model for a HRSG model. The method may also include retrieving, via the processor and the tool, the object model from a library for populating a graphical user interface (GUI) of a display and generating the HRSG model by applying a first set of parameters corresponding to each component of the object model, wherein the HRSG model corresponds to a design file used to construct the HRSG.

## Description

### BACKGROUND

The subject matter disclosed herein relates generally to a heat recovery steam generator (HRSG) and, more particularly, to systems and methods for digitization and automation of layout engineering for developing three-dimensional (3D) models used for HRSG designs.

A HRSG is a heat exchanger generally utilized to recover heat from an exhaust gas. To this end, the HRSG includes components, such as heat exchangers, steam drums, economizers, superheaters, and other auxiliary systems. In traditional embodiments, components of the HRSG may be individually modeled and combined by skilled engineering teams to design the HRSG, which may be time consuming and resource intensive. The HRSG may be designed based on factors, such as end-user specifications, site conditions, local codes and regulations, global engineering resources, and the like. For example, in a power plant industry, the HRSG may be customized based on the purpose of the power plant and/or the end user. In another example, the HRSG may be customized based on the local codes and regulations. As such, each HRSG may be individually modeled by the engineering team, which may increase plant construction time and costs. It is now recognized that improved systems and methods for reducing time and resources to design HRSGs are desired.

### BRIEF DESCRIPTION

Certain embodiments commensurate in scope with the originally claimed subject matter are summarized below. These embodiments are not intended to limit the scope of the claimed subject matter, but rather these embodiments are intended only to provide a brief summary of possible forms of the subject matter. Indeed, the subject matter may encompass a variety of forms that may be similar to or different from the embodiments set forth below.

In a first embodiment, a method of designing a heat recovery steam generator (HRSG) includes: receiving, via a processor, a design input file comprising a plurality of parameters associated with a plurality of components for an HRSG model and receiving an indication of selecting an object model for a HRSG model. The method may also include retrieving, via the processor and the tool, the object model from a library for populating a graphical user interface (GUI) of a display; and generating the HRSG model by applying a first set of parameters corresponding to each component of the object model, wherein the HRSG model corresponds to a design file used to construct the HRSG.

In a second embodiment, a system for designing a heat recovery steam generator (HRSG) model includes: a processor-based device storing or accessing a design application, which when executed by the processor-based device, causes acts to be performed including receiving user input indicative of selecting a tool. The tool, when executed by the processor-based device, causes acts to be performed including: receiving an indication of selecting an object model from a library for the HRSG model and retrieving a base from and an object model from a library, wherein the object model comprises a component. The tool may also, when executed by the processor-based device, cause acts to be performed including: receiving a design input file comprising a parameter for the component and generating the HRSG model by applying the parameter to the component.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a block diagram of an embodiment of a combined cycle power plant (CCPP);
FIG. 2 is a block diagram of an embodiment of a heat recovery steam generator (HRSG) of the CCPP of FIG. 1;
FIG. 3 is a schematic diagram of a design system for designing the three-dimensional (3D) model of the HRSG of FIG. 2;
FIG. 4 is a perspective view of an embodiment of a 3D model of a first top platform auxiliary module that may be used in the HRSG model of FIG. 3;
FIG. 5 is a perspective view of an embodiment of a 3D model of a second top platform auxiliary module that may be used in the HRSG model of FIG. 3;
FIG. 6 is a perspective view of an embodiment of a 3D model of a third top platform auxiliary module that may be used in the HRSG model of FIG. 3;
FIG. 7 is a perspective view of an embodiment of a 3D model of a fourth top platform auxiliary module that may be used in the HRSG model of FIG. 3;
FIG. 8 is a perspective view of an embodiment of the HRSG model of FIG. 3 including the top platform auxiliary modules of FIGS. 4-7;
FIG. 9 is a flowchart of an example method generating input parameters used for generating the HSRG model of FIG. 3 and creating a library; and
FIG. 10 is a flowchart of an embodiment of an example method for creating the HRSG model of FIG. 3.

### DETAILED DESCRIPTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

A heat recovery steam generator (HRSG) is a heat exchanger generally utilized in a combined cycle power plant (CCPP). The HRSG may flow a hot gas stream (e.g., exhaust gas) from one or more gas turbines of the CCPP across an evaporator (e.g., water coils) in order to generate steam utilized for powering one or more steam turbines of the CCPP. In this way, the HRSG operates as a thermodynamic link between the gas turbine(s) and the steam turbine(s) of the CCPP.

In traditional embodiments, a base of the HRSG (e.g., having an exhaust gas flow path, one or more evaporators, and associated equipment) is designed (e.g., modeled) and constructed, and other components, such as drums and piping (e.g., a steam manifold) of the HRSG, are designed and constructed based on design constraints of the HRSG. Designing the HRSG, in traditional embodiments, may be a complex engineering process that is multi-disciplinary and includes many steps. For example, an engineering team may start by gathering project requirements such as space constraints, environmental regulations, and performance goals. The engineering team may then determine components and/or component configurations for the HRSG based on the project requirements. The engineering team may also determine connections between each of the components, which may take time and resources. Additionally, or alternatively, the engineering team may determine heat transfer and mass flow requirements of the HRSG, a type of HRSG based on the application and available resources (including space constraints), mechanical design parameters (e.g., pressure ratings, temperature limits), fluid flows and pressures (e.g., flow distribution, pressure drops, heat transfer characteristics), piping designs, safety and environmental compliances, and so on. Thus, in traditional embodiments, significant time and resources is spent on designing the HRSG.

It is presently recognized that designing the HRSG can be improved by modularizing and standardizing the components of the HRSG, and then designing the base, if needed, to accommodate the modules. For example, top platform auxiliary modules, which may include components disposed at or adjacent to the top of the HRSG, may be modularized with standard features. In another example, side piping modules, which may include components disposed at or adjacent to a side of the HRSG, may also be modularized with standards features. In particular, connection points of the top platform auxiliary modules and/or the side piping modules may be standardized to connect anywhere on the base of the HRSG and/or with each other. In this way, complexity in designing the HRSG may be reduced.

In particular, embodiments of the present disclosure are directed to a design system that digitalizes and automates layout engineering to develop smart and intelligent three-dimensional (3D) models used in a 3D HRSG model. For example, the design system may automatically design the 3D models based on input parameters stored in a library and couple the 3D models to form a complete 3D HRSG model with little user intervention. The input parameters correspond to design guidelines, layout principles, accessibility and maintenance needs, safety aspects, product configurations (e.g., size, number of parts, distance between parts, weight), and so on. For example, the input parameters may define product configurations of a component used in the HRSG, such as a diameter of a pipe, a distance between two pipes, a length and width of an auxiliary module, and so on. The library may also include connections between the components, such as respective equipment, valves, steel structures, supports, instruments, power consumers, cables, lighting systems, platforms, ladders, and the like. For example, the connections may correspond to one or more piping systems used in the HRSG.

The input parameters may also include layout principles (e.g., design guidelines) used by the design software to create the 3D models by digitally associating one or more components. That is, components of the HRSG may be grouped into respective 3D models (e.g., auxiliary modules) based on their position on the HRSG (e.g., a base of the HRSG). As such, placement and routing of components within each model may be constrained to the model, which may reduce a number of placement and routing options for the individual components. Moreover, the 3D models may be reproduced, adjusted, and resaved, which may save time and resources in creating new configurations of the respective model. Furthermore, the overall HRSG model may be assembled by configuring the 3D models of the top platform and side components on a model of the HRSG base rather than by iteratively designing individual components for incorporation into the HRSG model, which may reduce time and cost associated with creating the overall HRSG model in comparison to the conventional method. Accordingly, an efficient design system for HSRGs may be provided.

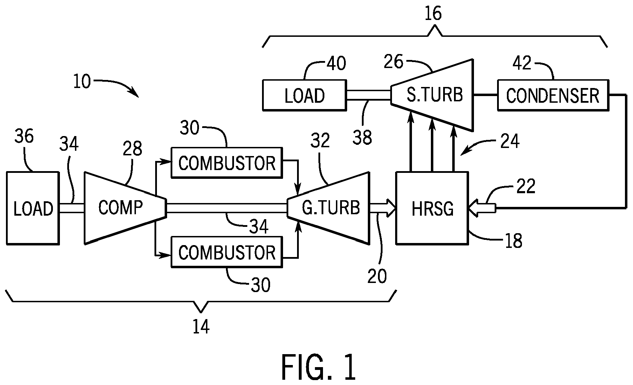

By way of introduction, FIG. 1 is a schematic diagram of an embodiment of a combined cycled power plant (CCPP) 10. In the illustrated embodiment, the CCPP 10 includes a gas turbine system 14, a steam turbine system 16, and a heat recovery steam generator (HRSG) 18 disposed between the gas turbine system 14 and the steam turbine system 16. The HRSG 18 is generally configured to enable heat transfer from an exhaust gas 20 of the gas turbine system 14 to a fluid (e.g., water 22) of the steam turbine system 16, thereby generating steam 24 for use in the steam turbine system 16. As shown, separate streams of steam 24 may be generated, such as a high pressure (HP) steam, an intermediate pressure (IP) steam, and a low pressure (LP) steam, each of which being received by a different area or section of a steam turbine 26 of the steam turbine system 16.

The gas turbine system 14 may include a compressor 28, one or more combustors 30, and a turbine 32 (e.g., an expansion turbine). In operation, an oxidant (e.g., air, oxygen, oxygen enriched air, or oxygen reduced air) is received by the compressor 28. The compressor 28 pressurizes the air in a series of compressor stages (e.g., rotor disks) with compressor blades. As the compressed air exits the compressor 28, the air enters the combustor 30 and mixes with a fuel. The air-fuel mixture may be ignited in the combustor 30, which then directs the combustion products through one or more turbine stages of the turbine 32. As the combustion products pass through the turbine 32, the combustion products contact turbine blades attached to turbine rotor disks (e.g., one of the turbine stages, each having turbine blades disposed circumferentially about the axis). As the combustion products travel through the turbine 32, the combustion products may force turbine blades to rotate the rotor disks. The rotation of the rotor disks induces rotation of at least one shaft 34 and rotation of the rotor disks in the compressor 28 (e.g., which may be rotatably coupled with one of the shafts 34). A load 36 (e.g., electrical generator) of the gas turbine system 14 connects to one of the shafts 34 and uses the rotational energy of the shaft 34 to generate electricity for use by a power grid. The combustion products then exit the turbine 32 as the exhaust gas 20.

As previously described, the exhaust gas 20 may then be routed to the HRSG 18, along with the water 22, whereby the HRSG 18 utilizes the exhaust gas 20 to heat the water 22 and generate pressurized steam. The steam turbine system 16 includes the steam turbine 26, a shaft 38, and a load 40 (e.g., electrical generator). As the hot pressurized steam 24 enters the steam turbine 26, the steam 24 contacts turbine blades attached to turbine rotor disks (e.g., turbine stages). As the steam 24 passes through the turbine stages in the steam turbine 26, the steam 24 induces the turbine blades to rotate the rotor disks. The rotation of the rotor disks induces rotation of the shaft 38. As illustrated, the load 40 (e.g., electrical generator) connects to the shaft 38. Accordingly, as the shaft 38 rotates, the load 40 (e.g., electrical generator) uses the rotational energy to generate electricity for the power grid. As the pressurized steam 24 passes through the steam turbine 26, the steam 24 loses energy (i.e., expands and cools). After exiting the steam turbine 26, the steam exhaust may enter a condenser 42, which converts the steam exhaust to the water 22 routed back to the HRSG 18.

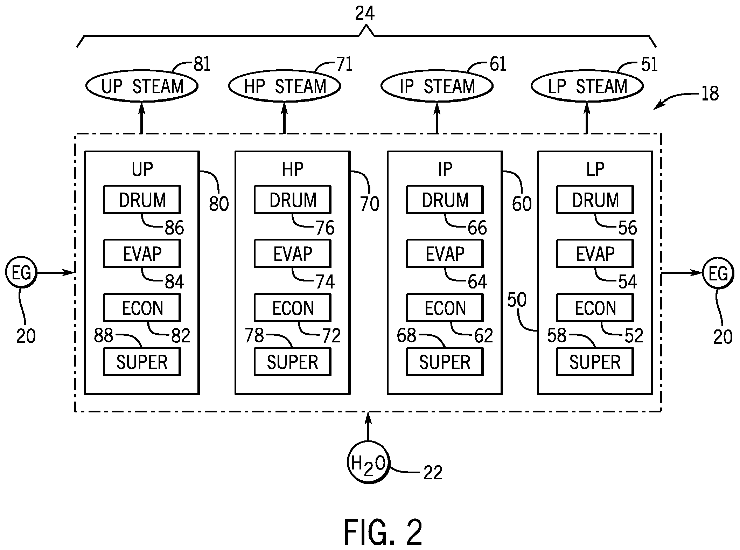

FIG. 2 is a schematic diagram illustrating the HRSG 18 containing a low pressure (LP) section 50, an intermediate pressure (IP) section 60, a high pressure (HP) section 70, and an upper platform (UP) section 80. Each section 50, 60, 70, 80 may be configured to generate the steam 24 at various pressures. For example, the LP section 50 may generate LP steam 51, the IP section 60 may generate IP steam 61, the HP section 70 may generate HP steam 71, and the UP section 80 may generate UP steam 81.

The components of the HRSG 18 in the illustrated embodiment are simplified and are not intended to be limiting. That is, FIG. 2 should not be read as denoting a relative ordering or positioning of the LP section 50, the IP section 60, the HP section 70, the UP section 80, or any of the individual components in each of these sections 50, 60, 70, 80. Rather, the illustrated HRSG 18 is shown to convey the general operation of certain HRSG systems. As discussed above, the exhaust gas 20 may be routed to and through the HRSG 18 via a first flow path and used to heat the water 22 routed to the HRSG 18 via one or more second flow paths. The exhaust gas 20 may heat the water 22 in each section 50, 60, 70, 80 of the HRSG 18.

As illustrated in no particular order, the LP section 50 includes an LP economizer 52, an LP evaporator 54, an LP drum 56, and an LP superheater 58. The LP economizer 52 may be a device configured to pre-heat the water 22 to prepare the water 22 for receiving heat from the exhaust gas 20. For example, the LP economizer 52 may generally pre-heat the water 22 to an ideal temperature for controlling an amount of heat required to generate the steam 24. The LP economizer 52 may then direct the pre-heated water 22 to other components of the HRSG 18, for example, the LP drum 56. The LP drum 56 may be a storage container that feeds the water 22 to the LP evaporator 54. The LP evaporator 54 may receive the pre-heated water 22 to further heat the water 22 to generate the steam 24. In some embodiments, the water 22 may be in a vapor form before, during, or after being heated by the exhaust gas 20 in the LP evaporator 54. The steam 24 may then be received by the LP superheater 58, which may convert saturated steam produced by the LP evaporator 54 into superheated or dry steam (e.g., the LP steam 51).

As illustrated, the IP section 60 may include an IP economizer 62, an IP evaporator 64, an IP drum 66, and an IP superheater 68 to produce IP steam 61. The IP economizer 62, the IP evaporator 64, the IP drum 66, and the IP superheater 68 may have similar functionality as the LP economizer 52, the LP evaporator 54, the LP drum 56, and the LP superheater 58, respectively. Further, as illustrated, the HP section 70 includes an economizer 72, an evaporator 74, a drum 76, and a superheater 78 to produce HP steam 71. The HP economizer 72, the HP evaporator 74, the HP drum 76, and the HP superheater 78 may have similar functionality as the LP economizer 52, the LP evaporator 54, the LP drum 56, and the LP superheater 58, respectively. Moreover, the UP section 80 includes an economizer 82, an evaporator 84, a drum 86, and a superheater 88 to produce UP steam 81. The UP economizer 82, the UP evaporator 84, the UP drum 86, and the UP superheater 88 may have similar functionality as the LP economizer 52, the LP evaporator 54, the LP drum 56, and the LP superheater 58, respectively. Of course, as previously described, the HRSG 18 in accordance with the present disclosure may include fewer components or other components than those described above. For example, the UP section 80 may not include the UP drum 86. Additionally, or alternatively, the HRSG 18 may include one or more steam manifolds configured to receive the steam 24 and direct the steam 24 toward the steam turbine system 16 illustrated in FIG. 1.

As suggested in the description above, designing the HRSG 18 of FIG. 2 (and CCPP of FIG. 1) may involve time-intensive and resource-intensive design techniques. Conventionally, for example, the HRSG design is subject to customization due to various factors such as end user specification, site conditions, local codes and regulations, and global engineering resources. Due to such customization in design, skilled engineering teams spend time and resources to repeatedly build individual 3D HRSG models from the ground up. One example relates to designing one HP drum 76 used in the 3D HSRG model. The HP drum 76 includes eight to twelve raiser nozzles coupled to piping of the HRSG 18 and two saddles on either side of the HRSG center line that sit on a steel structure (e.g., Drum Saddle Support Steel). If it is necessary in designing the HRSG for either drum saddle to be moved, then the saddle support steel, the raiser nozzles, and piping also need to be moved, which may involve from ten to fifteen operations (e.g., 3D operations in the CAD software) performed by the user.

In another example, the HP drums 76 may include side access manholes that include a steel structure platform with handrails and ladders. The HP drums 76 may also include level measuring devices and associated piping on either side of the drum. However, if it is necessary in designing the HRSG for a length of the drum to be increased, then the manholes, the level measuring devices, and the associated piping system may need to be moved due to the change in drum length. Indeed, this change may be manually performed by the user using ten to twelve operations. The user may perform such operations for components of the LP section 50, the IP section 60, the UP section 80, the base, piping between the sections, and so on. As such, designing the entire HRSG model may be a time-consuming and resource-intensive process due to customization of the HRSG 18.

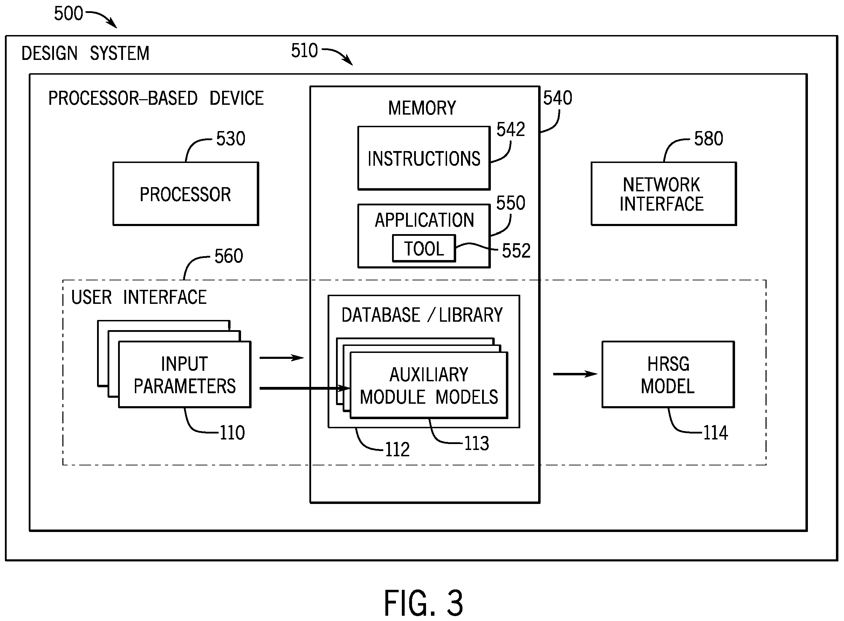

It is presently contemplated, that, in accordance with this disclosure, the components (e.g., auxiliary hardware, such as piping systems, valves, drums, tanks, pumps, steel structures, supports, instrumentation, electrical systems) of the HRSG 18 may be modularized with standard features to improve the design process (referred to herein as "auxiliary modules"), and the auxiliary modules may be used to design the HRSG 18. With the foregoing in mind, FIG. 3 illustrates a schematic diagram of designing the HRSG 18 using a design system 500.

The design system 500 may include one or more processor-based devices 510. The term "processor-based device" may include, for example, any suitable type of computing device, including portable computing devices (e.g., smartphone, tablet, computer, wearable computer, etc.), workstations, desktop computers, servers, and so on. The processor-based device 510 may include a communication component, a processor 530, a memory 540, stored instructions 542, input/output (I/O) ports, a display (e.g., a user interface) 560, and a database 112, and the like. Additionally, or alternatively, the processor-based device 510 may be communicatively coupled to a server (e.g., cloud server, database) and receive updates from the server via a network interface 580.

The processor-based devices 510 are configured to execute an application 550 used to design a 3D HRSG model 114 with one or more auxiliary module models 113. The processor-based device 510 may include various types of components that may assist the processor-based device 510 in performing various types of tasks and operations. The processor-based device 510 can include one or more processors 530, which can include any processing device, such as a microprocessor, microcontroller, integrated circuit, logic device, and/or other suitable processing device.

During operation, the processor-based device 510 may store and/or execute a computer-aided design (CAD) software application 550 with a tool 552 (e.g., user interface plugin) used to design a 3D HRSG model 114. The tool 552 may reduce a number of operations performed by the user (e.g., process engineer, engineering team), provide for customization of the HRSG model 114, and reduce a number of multi-disciplinary operations, thereby increasing efficiency of design operations. To this end, the design system 500 may receive and/or generate input parameters 110, store the input parameters 110 in a library 112, and generate the HRSG model 114 using the input parameters 110 from the library 112. In certain instances, the tool 552 may implement machine-learning techniques to identify one or more components based on user input, to determine relationships among the components, and to generate an auxiliary module model 113 and/or an HRSG model 114 using the components. In another example, the tool 552 may identify and/or place frequently selected components by the user at the top of a list (e.g., drop down menu) to reduce a number of clicks used by the user to navigate to the components.

The input parameters 110 may include values (e.g., parameters) corresponding components used in the HRSG model 114. For example, the input parameters 110 may include a length, a diameter, a connection point, a depth, a width, and so on of the components, such as a diameter of a pipe, a length of a platform, a weight of a valve, a gap between two pipes, a depth of a frame, and so on. Additionally, the input parameters 110 may be divided (e.g., into one or more design input files) based on a corresponding auxiliary module. For example, the input parameters 110 for the IP section 60 may include a pipe specification being 55 millimeters (mm), a first valve length being 760 mm, a second valve length being 760 mm, a gap between the first valve and the second valve being 1000 mm, and so on. The input parameters 110 may also include a size of the corresponding auxiliary module. For example, the width of the IP section 60 may be 3800 mm (3.8 meters), a length may be 22000 mm (22 m), and a height may be 1450 mm (1.45 m). The input parameters 110 for the HP section 70, the LP section 50, and the UP section 80 may be the same as or different than the input parameters of the IP section 60.

The input parameters 110 may also include a template with know-how and experience on layout principles, design guidelines, accessibility and maintenance needs, safety, and the like. For example, the input parameters 110 may associate components within each auxiliary module based on arithmetic operations set by the manufacturer or based on user feedback. For example, using the tool 552, adjusting the position of the drum saddle in the HP drum 76 may be performed in two to four operations rather than the ten to fifteen operations discussed above. In another example, the adjustment to the manholes, the level measuring device, and the associated piping system may be performed in four to six operations by the tool 552 as compared to the ten to twelve operations discussed above.

The input parameters 110 may be adjusted to change certain parameters of the auxiliary module model and/or to create new module models. The input parameters 110 may be downloadable from a cloud repository (e.g., via the network interface 580) to be used by the user, bundled in the design software (e.g., application 550), stored in memory 540 (e.g., flash or CD-ROM), or the like. The input parameters 110 may be updated by a manufacturer, the processor engineer, and/or other users to update the library 112. For example, the input parameters 110 updated (e.g., adjusted) with user feedback are used to establish new layout rules, such as 3D layout engineering discipline principles being tested and covered with conceptual principles. In another example, the input parameters 110 may be updated based on changes in local codes and/or regulations.

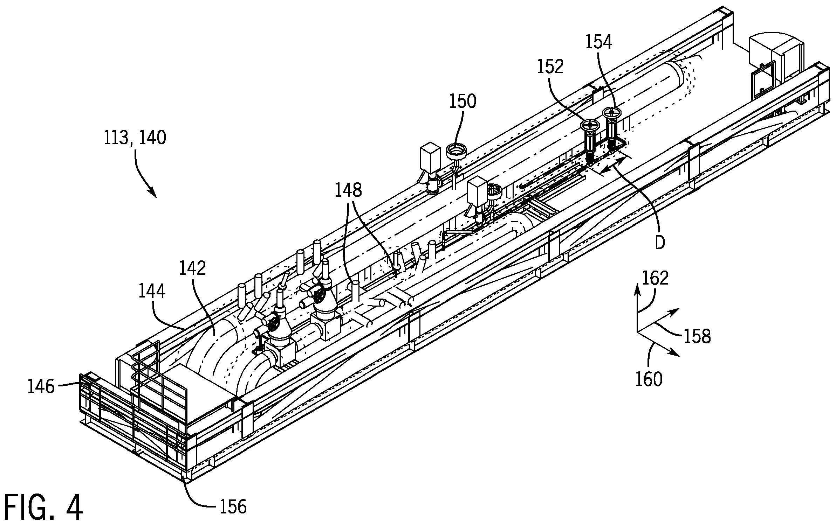

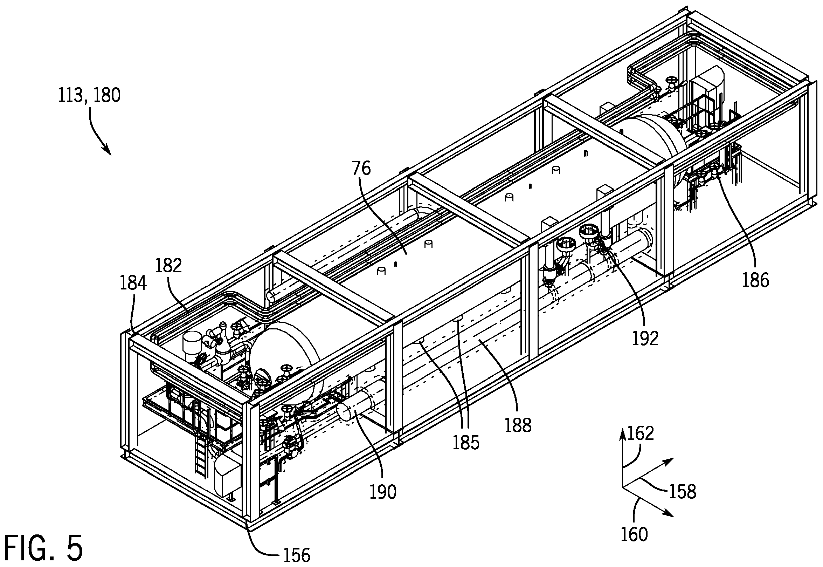

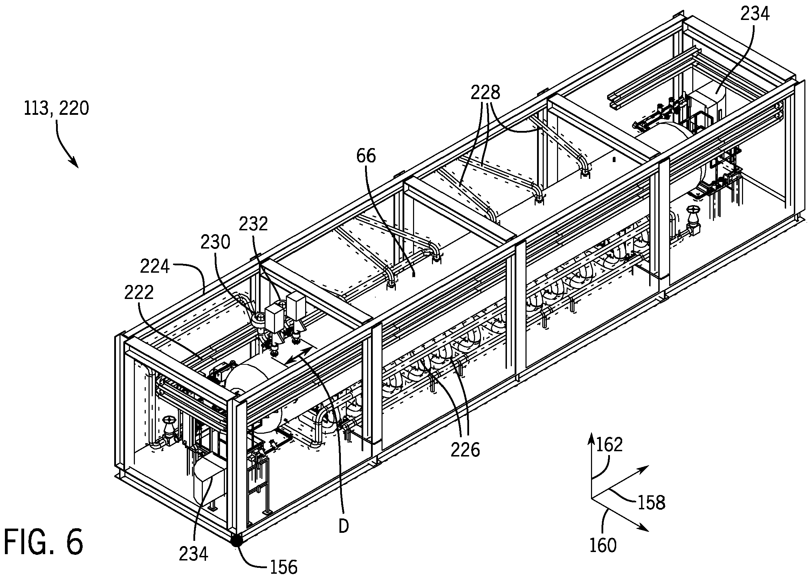

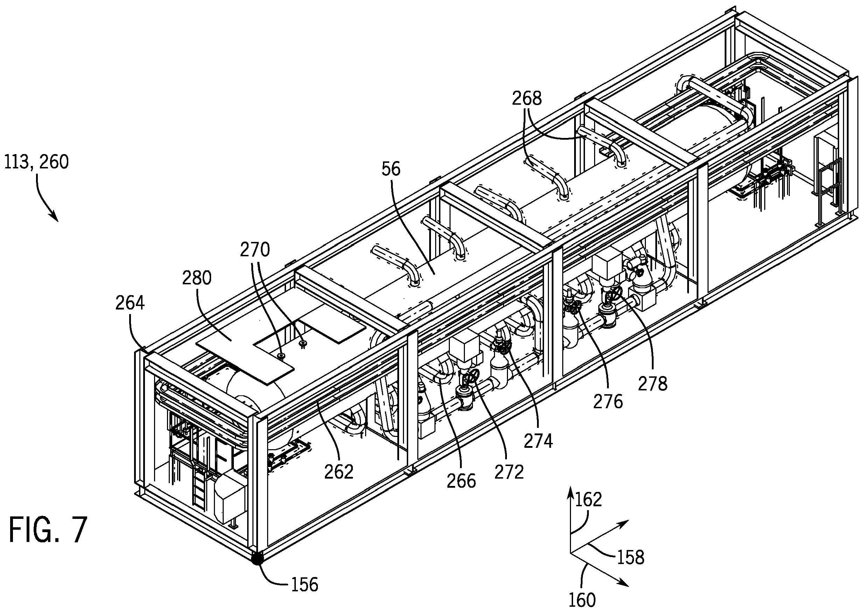

The input parameters 110 may be used to generate auxiliary module models 113. That is, the components may be grouped into auxiliary module models 113 with standard features that are used to form the HRSG model 114. For example, based on geographical location of each component within the HRSG, the components (e.g., equipment, valves, steel structures, supports, instruments, power consumers, cables, lighting systems, platforms, ladders) may be grouped into respective auxiliary module models 113. The auxiliary module models 113 may have standard sizes, shapes, and terminal connections that can be used for various HRSG embodiments. For example, top platform auxiliary modules may include a first top platform auxiliary module (140, FIG. 4) in which piping or a manifold (e.g., steam manifold) and corresponding equipment (e.g., silencers, cable trays) are disposed; a second top platform auxiliary module (180, FIG. 5) in which a high pressure (HP) drum and corresponding equipment (e.g., silencers, cable trays) are disposed; a third top platform auxiliary module (220, FIG. 6) in which an intermediate pressure (IP) drum and corresponding equipment are disposed; and a fourth top platform auxiliary module (260, FIG. 7) in which a low pressure (LP) drum, and corresponding equipment (e.g., silencers, cable trays) are disposed. Each top platform auxiliary module may include a generally rectangular frame in which the above-described components are installed, where the generally rectangular frame includes a generally planar bottom side to be coupled to the base of the HRSG 18.

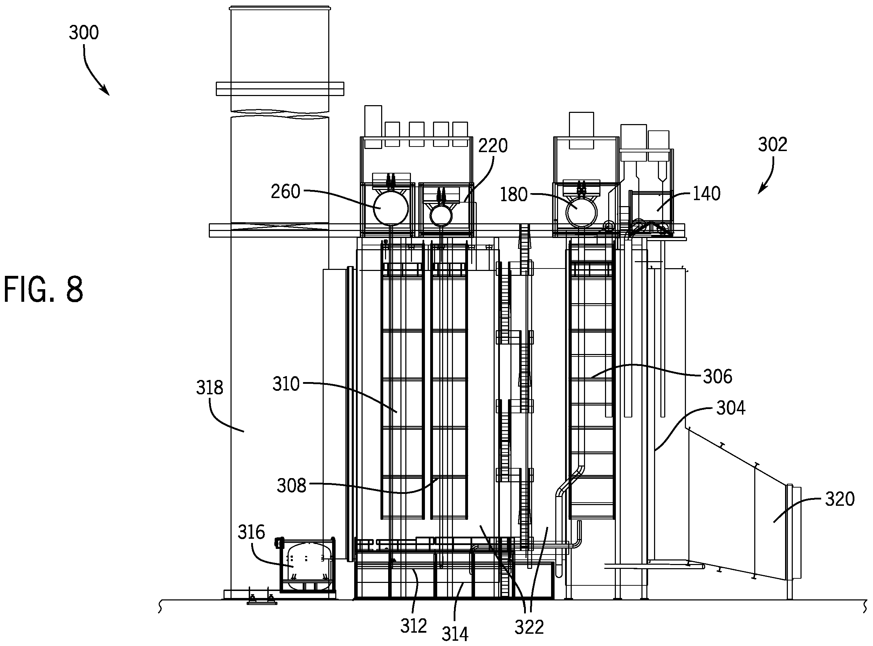

The side piping modules (e.g., also included in auxiliary module models 113) may include, for example, a respective piping module for each top platform auxiliary module in which piping or a manifold and corresponding equipment are disposed. Each side piping module (e.g., 306, 308, 310 in FIG. 8) may include a generally rectangular frame in which the above-described components are installed, where the frame includes a generally planar side easily received by the side of the HRSG 18. Within each module, key properties are digitalized, and 3D layout engineering principles are formulated with associative arithmetic equations to generate the respective module models.

The library 112 may store the input parameters 110 and the auxiliary modules 113. To this end, the library 112 may be a database stored in the memory 540 of the processor-based device 510. The memory 540 can include one or more computer-readable media including, but not limited to, a non-transitory computer-readable medium, RAM, ROM, hard drives, flash drives, and/or other memory devices. The memory 540 can store information accessible by the one or more processors 530, including computer-executable or computer-readable instructions 542 that can be executed by the one or more processors 530. The instructions 542 can be any set of instructions that, when executed by the one or more processors 530, cause the one or more processors 530 to perform operations. In some embodiments, the instructions 542 can be executed by the one or more processors 530 to perform operations, such as any of the operations and functions for which the design system 500 is configured. The instructions 542 can be software written in any programming language or can be implemented in hardware. Additionally, and/or alternately, the instructions 542 can be executed in logically and/or virtually separate threads on processors 530. The memory 540 can further store data that can be accessed by the processors 530.

Additionally, or alternatively, the library 112 may be stored in the server (e.g., cloud server) and may be accessible to the processor-based device 510. The processor-based device 510 may communicate with the server via the network interface 580. The network interface 580 is used to communicate, for example, with other components of the design system 500. The network interface 580 can include components for interfacing with one or more networks, including, for example, transmitters, receivers, ports, controllers, antennas, and/or other suitable components.

The library 112, for example, may store the input parameters 110, relationships (e.g., connections) between components of the HRSG model 114, relationships between components of an auxiliary module model 113, one or more auxiliary module models 113 (e.g., generated by a manufacturer, generated by the user), and the like. The relationships, for example, may include mechanical connections, electrical connections, fluid connections, and so on.

The library 112 may also store the auxiliary module models 113. The auxiliary module models (e.g., object models) may be pre-generated by the manufacturer, generated and saved to the library 112 by the user, and/or generated and saved to the library 112 by other users. The pre-generated auxiliary module models 113 may include common components without dimensions and may be customized by the user. In other words, the pre-generated auxiliary module models 113 may serve as a base model for customization by the user. To instantiate the auxiliary module model, the user may input a design input file with the input parameters 110 for each component of the auxiliary module. The user may further adjust the parameters of each component, add or remove components within the auxiliary module model 113, adjust positions or one or more components within the auxiliary module model 113, and the like. The user may click a button within the tool to instantiate the auxiliary module model 113. Additionally, or alternatively, the user may name and save the newly generated auxiliary module model 113 to the library to use in subsequent projects.

The user may use the input parameters 110 and/or previously generated auxiliary module models 113 to create new auxiliary module models 113. For example, the user may create new input parameters 110 by copying parameters from an existing auxiliary module model 113, updating certain parameters, adding additional parameters, importing the parameters into the tool, and instantiating the module. Once the new auxiliary module model 113 has been instantiated or copied from the base model, it will be ready for use by the user. The new auxiliary module models 113 may be subsequently saved to the library 112 for use in different projects. In this way, time and resources used to design the auxiliary module models 113 may be saved, thereby improving design efficiency.

The HRSG model 114 may be generated using the input parameters 110. For example, a base of the HRSG model 114 may be designed around the features of the auxiliary modules. For example, connections of the base (e.g., heat exchanger connections, such as superheater, economizer, or evaporator connections) may also be modularized and stored as an input parameter 110. For example, the library 112 may store link elements (e.g., piping) that may be used to connect terminal connections of each auxiliary module to the connections of the base. The tool (e.g., automatically, via input by the user) may retrieve the link elements and couple each respective auxiliary module model with the base model to form the HRSG model 114. In this way, the design system may reduce a number of operations performed by the user and/or automate operations of the design process, thereby reducing time and resources used to design the HRSG model 114 and reducing the likelihood of manual error.

With the foregoing in mind, FIGS. 4-7 illustrate example embodiments of auxiliary module models 113 used in the HRSG model 114. In particular, FIGS. 4-7 illustrate the first top platform auxiliary module 140 with piping or a manifold and corresponding equipment, the second top platform auxiliary module 180 with the HP drum and corresponding equipment, the third top platform auxiliary module 220 with the IP drum and corresponding equipment, and the fourth top platform auxiliary 260 module with the LP drum and corresponding equipment. The top platform auxiliary modules 140, 180, 220, 260 are provided with a generally planar, or flat, bottom surface, which may include a solid surface or frame members (e.g., forming a mesh or lattice structure). The generally planar bottom surfaces of the modules 140, 180, 220, 260 (and/or the generally rectangular shapes of the frames) may enable improved installation of the modules 140, 180, 220, 260 on top of the HRSG base. In other embodiments, the modules 140, 180, 220, 260 may include a different shape that is common between them.

FIG. 4 is a perspective view of an embodiment of a 3D model of the first top platform auxiliary module 140 that may be used in the HRSG model 114. The first top platform auxiliary module 140 may be an upper platform (UP) steam piping module that includes piping (or a steam manifold 142) and cable trays 144, which are disposed at least partially in, and/or integrated with, a frame 146 of the first top platform auxiliary module 140. As illustrated, the first top platform auxiliary module 102 does not include additional components, such as the LP drum 56, the IP drum 66, the HP drum 76, or silencers. However, in other embodiments, the first top platform auxiliary module 140 may include the LP drum 56, the IP drum 66, the HP drum 76, and/or silencers based on the design of the HRSG model 114.

The component(s) disposed within the first top platform auxiliary module 140 may be defined by the input parameters 110. For example, the frame 146 of the first top platform auxiliary module 140 includes an approximate length (L) x width (W) x height (H) based on the input parameters 110. For example, the length x width x height may be 25.6 meters x 6.6 meters x 7.4 meters (84 feet x 22 feet x 24 feet). Additionally, the size of the frame 146 may be adjusted (e.g., based on adjustments to the input parameters 110) to receive any of a number of differently sized HP drums 76 depending on the power needs of the corresponding HRSG and/or CCPP. By way of example, the input parameters 110 may specify product configurations, such as a number of HP steam links 148, a diameter and/or a radius of a safety valve 150, a distance (D) between two HP steam start-up vent valves 152, 154, and so on.

As discussed herein, the input parameters 110 include a template with the layout principles and/or design guidelines for the first top auxiliary module 140. To this end, the first top auxiliary module 140 includes a reference point 156 (e.g., origin point in X, Y, and Z coordinates) for determining a position of each component within the module 140. That is, the input parameters 110 may indicate the position of a component in comparison to the reference point 156. For example, a position of a first HP steam link 148 may be 8 meters x 3.3 meters x 4.8 meters away from the reference point 156. In another example, the position may be determined based on a north direction 158 (e.g., Y direction), an east direction 160 (e.g., X direction), and an upwards direction 162 (e.g., Z direction) with respect to the reference point 156. For example, the distance between the two HP steam start-up vent valves 152, 154 may be 0.5 meters in the north direction 158. As discussed herein, the tool may couple and/or position the components within the auxiliary module 140 based on the design guidelines and provide a smart and intelligent model 113 corresponding to the first top auxiliary module 140 in a fewer number of operations than a number of manual operations used by the process engineer.

FIG. 5 is a perspective view of an embodiment of a 3D model of a second top platform auxiliary module 180 that may be used in the HRSG model 114. The second top platform auxiliary module 180 may be a high pressure (HP) drum module that includes the HP drum 76 and cable trays 182, which are disposed at least partially in, and/or integrated with, a frame 184 of the second top platform auxiliary module 104. Although not illustrated, the second top platform auxiliary module 180 may include additionally components, such as silencers, disposed at least partially in and/or integrated with the frame 184.

The input parameters 110 may include values for the components disposed within the second top platform auxiliary module 180. By way of example, the frame 184 of the second top platform auxiliary module 180 includes an approximate length (L) x width (W) x height (H) of 24 meters x 5.5 meters x 4.5 meters, with an approximate weight of 350 tons. The input parameters 110 may specify product configurations, such as a number of HP risers 185 (e.g., inlet, outlet), a diameter of each of the HP risers 185 (e.g., inlets, outlets), a type and/or a number of HP drum instruments 186, a length of a steam link 188, a diameter of a steam inlet 190, a type and/or a number of valves, and so on. Additionally, or alternatively, the input parameters 110 may determine a position of each component with respect to the reference point 156, as discussed above.

FIG. 6 is a perspective view of an embodiment of a 3D model of a third top platform auxiliary module 220 that may be used in the HRSG model 114. The third top platform auxiliary module 220 may be an intermediate pressure (IP) drum module with the IP drum 66 and cable trays 222, which are disposed at least partially in, and/or integrated with, a frame 224 of the third top platform auxiliary module 220. In certain embodiments, the third top platform auxiliary module 220 may include additional components, such as HP drum 76, silencers, and the like based on the design of the HRSG model 114.

Similar to the first top platform auxiliary module 140 and/or the second top platform auxiliary module 180, the third top platform auxiliary module 220 may be defined by the input parameters 110. For example, the frame 224 of the third top platform auxiliary module 220 includes an approximate length (L) x width (W) x height (H) of 22 meters x 4.5 meters x 4.5 meters, with an approximate weight of 222 tons. Additionally, or alternatively, the input parameters 110 may specify product configurations, such as a number of IP risers 226 (e.g., inlet, outlet), a diameter and/or a radius of each IP riser 226, a number and/or a diameter of IP saturation steam pipes 228, a number of IP drum vents 230, 232, a distance (D) between the IP drum vents 230, 232, a weight of the cable trays 222, a number of junction boxes 234, and so on. As discussed herein, the positions of the components may be determined with respect to the reference point 156 and/or with respect to the north direction 158, the east direction 160, and/or the upwards direction 162.

FIG. 7 is a perspective view of an embodiment of a 3D model of a fourth top platform auxiliary module 260 that may be used in the HRSG model 114. The fourth top platform auxiliary module 260 may be a low pressure (LP) drum module that includes the LP drum 56 and cable trays 262, which are disposed at least partially in, and/or integrated with, a frame 264 of the fourth top platform auxiliary module 260. Although not illustrated, the fourth top platform auxiliary module 260 may include additional components such as the IP drum 66, silencers, and the like.

The input parameters 110 may include product configurations for the components disposed within the fourth top platform auxiliary module 260. For example, the frame 264 of the fourth top platform auxiliary module 260 includes an approximate length x width x height of 25.6 meters x 8.5 meters x 7.4 meters (84 feet x 28 feet x 24 feet), with an approximate weight of 222 tons. The input parameters 110 also define a number and/or a diameter of LP risers 266, saturation steam pipes 268, LP drum vents 270, valves 272, 274, 276, 278, and the like. Moreover, the input parameters 110 may define a size, a shape, and/or a position of a safety relief valve platform 280 coupled to the frame 264. Additionally, or alternatively, the input parameters 110 may define the position of the components with respect to the reference point 156 and/or the north direction, the east direction, and the upwards direction.

FIG. 8 is a perspective view of an embodiment of a HRSG model 300 (e.g., the HRSG model 114 described with respect to FIG. 3) including models of the top platform auxiliary modules 140, 180, 220, 260. As previously described, components of the HRSG 18 may be grouped into auxiliary modules that may be coupled to a base based on the input parameters 110. For example, the top auxiliary modules 140, 180, 220, 260 form the top platform assembly 302 and are disposed on top of the base 304. Additionally, the HRSG model 300 may include models of side piping modules 306, 308, 310, which are disposed on the side of the base 304 and respectively coupled to the second top auxiliary module 180, the third top auxiliary module 220, and the fourth top auxiliary module 220. The HRSG model 300 may also include models of bottom auxiliary modules, such as a drain piping module 312, a feedwater (FW) piping module 314, a blow down tank module 316, a FW recirculation pump module, and the like.

The base 304 may also be defined by the input parameters 110. As illustrated, the base 304 may include a smoke stack 318 disposed at one end of the base 304 and an inlet duct 320 (e.g., for receiving exhaust gas from one or more gas turbines) disposed at the other end of the base 304. The input parameters 110 may define a position, a size, and/or a shape of the smoke stack 318 and/or the inlet duct 320. Additionally, the base 304 may include several columns 322 spaced at particular distances away from each other to ensure that the components (e.g., evaporator sections, superheater sections, economizer sections) and connection portions thereof within the columns 322 will align with the terminal connections protruding from the top platform auxiliary modules 140, 180, 220, 260, the side piping modules 306, 308, 310, and/or the additional modules (e.g., a drain piping module 312, a feedwater (FW) piping module 314, a blow down tank module 316, a FW recirculation pump module). The distances may be, for example, defined by the input parameters 110 to be between 2.0 meters (6.6 feet) and 5.0 meters (16.4 feet), 2.5 meters (8.2 feet) and 4.5 meters (14.8 feet), 3.0 meters (9.8 feet) and 4.0 meters (13.1 feet), or 3.25 meters (10.7 feet) and 3.75 meters (12.3 feet). For example, the base 304 may include columns 322 disposed in a row, where the columns 322 are spaced at particular distances to ensure that the components within the columns 322, and connection features of the components disposed within the columns 322, are appropriately spaced for supporting and connecting the top platform auxiliary modules 102, 104, 106 after they are coupled to the top of the base 304.

Additionally, the connections between each of the modules 140, 180, 220, 260, 306, 308, 310, 312, 314, 316 and the base 304 may be defined as the input parameters 110. In particular, the layout principles and/or the design guidelines of the input parameter 110 may include connection points between the two. For example, terminal connections of the auxiliary modules 140, 180, 220, 260 (e.g., intermediary pipe segments) may be standardized and/or designed to interface with connection points of the base 304 (e.g., evaporator connections, superheater connections, or economizer connections). For example, the terminal connections of the top platform auxiliary modules 140, 180, 220, 260 may be defined to accommodate reception of a range of pressure parts disposed within the base 304. Additionally, or alternatively, the terminal connections of the side piping modules 306, 308, 310 and/or the bottom auxiliary modules 312, 314, 316 may be defined to accommodate the top auxiliary modules 140, 180, 220, 260 and/or the parts disposed within the base 304. Thus, the auxiliary modules are versatile for interfacing with various size bases 304, depending on output needs of the HRSG 18. In this way, design efficiency may be improved.

In certain instances, the tool may receive an indication of constraints to the HRSG model 300. For example, shipping constraints may require that the top platform auxiliary modules include smaller heights (i.e., not-to-exceed heights). To this end, the tool may receive an indication of the shipping constraints, update the input parameters 110 based on the shipping constraints, and update the HRSG model 300 based on the updated input parameters 110. That is, the tool may automatically update the HRSG model 300 based on the received constraint and/or with limited operator input, which may reduce an amount of resources and/or time used by the operator to generate the HRSG model 300 that accommodates the constraints.

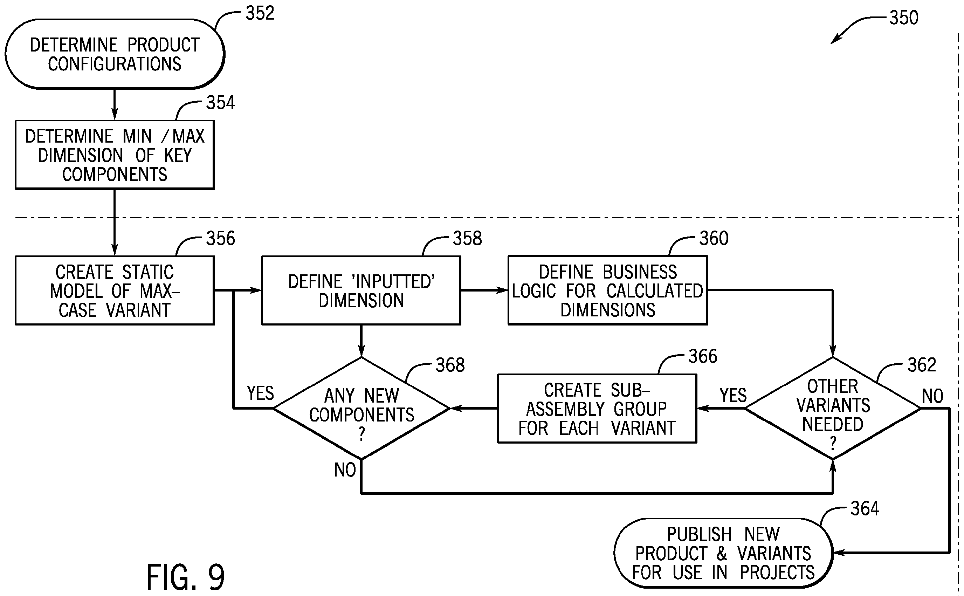

FIG. 9 is a flowchart of an example computer implemented method 350 for generating the input parameters used in generating the HRSG model 114, 300 and creating the library. The method 350 includes various computer-implemented steps represented by blocks that may be performed by the processor-based device described with respect to FIG. 3 and/or the tool within the CAD software. It should also be noted that the method 350 may be performed by other suitable processor-based devices (e.g., cloud server, webpage, tablet, mobile device, etc.) that may perform the methods described herein. For example, certain steps or portions of the method 350 may be performed by separate systems or devices, such as one or more processors, processor-based devices, and/or computers. Although the flowchart illustrates the steps in a certain sequence, it should be understood that the steps may be performed in any suitable order and certain steps may be carried out simultaneously, where appropriate.

At block 352, product configuration(s) may be determined. For example, all possible components including all possible sizes and/or shapes of the components used in the HRSG may be determined. The product configurations may include relative locations of the components (i.e., relative positioning). The components may include any, and preferably all, of the HRSG components as discussed herein. Additionally, or alternatively, all connections between the components may be determined. The connections may include mechanical connections (e.g.., welded connections, bolted connections, etc.), electrical connections (e.g., power connections, data/communication connections, etc.), fluid connections (e.g., pipe connections, valve connections, etc.), and so on.

At block 354, maximum and/or minimum dimensions of key components may be determined. That is, product dimensions for each of the components used in the HRSG may be determined. For example, variations of the product dimensions for the components may be determined by the tool and/or a manufacturer (e.g., of the tool). As discussed herein, the components may include piping systems, valves, drums, tanks, pumps, steel structures, supports, instrumentation, electrical systems, inlets, outlets, pressure parts, and the like. For each of the components, a minimum dimension and a maximum dimension may be determined. In other words, a product range may be determined for each component. For example, a length of the IP drum may range between 14 to 17 meters, a vent of the IP drum may range from 0.29 meters to 1.5 meters, a temperature range for the IP drum may be between 600 to 630 degrees Celsius, and so on. Additionally, or alternatively, product specifications for each component may be defined. For example, a heat transfer rate, a flow rate, a maximum operating temperature (or temperature range), a maximum operating pressure (or pressure range), and the like for each component may be determined. Additionally, or alternatively, connections such as a type and/or a size of piping, a number of valves, a minimum and/or a maximum distance between the valves, and so on may be determined.

At block 356, a static model using the maximum case variant may be created. That is, the components may be grouped into sub-groups of an auxiliary module and used to generate a respective static model using the product dimensions of each component. The sub-groups may be determined based on a discipline (e.g., civil engineering, electrical engineering, mechanical engineering, environmental engineering, etc.) or a product (e.g., single component). For example, a sub-group may be a product reheat manifold including one or more pumps. In another example, the sub-group may be a platform and/or circuitry used in a respective auxiliary module. The sub-group may be transformed and/or adjusted to meet constraints of the auxiliary module and/or the HRSG model. Since the sub-group uses the maximum dimensions of each component, a size of the component may be decreased so that the sub-group meets the constraints of the auxiliary group and/or the HRSG model.

At block 358, inputted dimension(s) may be defined. In certain instances, the dimensions of the sub-groups may be associated with the model. For example, the dimensions may include a dimension of a pipe, a number of valves, a length of a frame, a volume of a tank, and so on. Additionally, or alternatively, distances between each component of the sub-group may be defined and associated with the model.

At block 360, business logic for dimensions may be determined. The business logic may be used to determine positioning of each of the components, including positioning between components. To this end, the business logic may include a user defined dimension, a pre-determined dimension, or a combination thereof. For example, the user may define a dimension for the manifold to have a diameter of 600 millimeters and a spacing between the manifold and a steel beam to be 20 millimeters. If the diameter of the manifold decreases, then the position of the manifold may be moved to keep the spacing at 20 millimeters. In another example, the pre-determined dimension may be set based on previous designs, regulations (e.g., safety and compliance), and the like. For example, the previous design may use eight outlets that may each be spaced 30 millimeters apart. As such, a current design may use eight outlets also each spaced 30 millimeters apart. In certain instances, the business logic may be the layout principles and/or design guidelines discussed above. For example, a sub-group may include a pair of objects named "a primary port" and "a follower port." The primary port may be coupled to a parent object of the sub-group, and the follower port may be coupled to a linked element (e.g., a pipe, a valve, a fastener, etc.). When the linked element is introduced to the sub-group, the follower port will be coupled to the primary port and use position of the primary port to position itself. In this way, the primary port and the follower port may be associated with each other. For example, a manifold nozzle may include a primary port of 20 centimeters. Upon receiving user indication of the linked element, such as a pipe, the tool may automatically couple the linked element to the primary port and set a diameter of the linked element to 20 centimeters. As such, the tool may reduce a number of operations performed by the user.

At determination block 362, a determination of whether other variants are needed is made. In particular, the sub-groups may be analyzed to determine if other variations of the sub-groups may be used in the HRSG model.

If additional variants are not needed, then at block 364, new product and variants may be published for use in subsequent projects. The dimensions and/or calculations may be verified by the tool and/or the manufacturer. If the dimensions and calculations are approved, then the sub-groups and corresponding variants may be published as models to the library. In other words, the input parameters including dimensions of the components and/or connections between the components may be uploaded to the library. In certain instances, the input parameters may be updated and/or adjusted. The tool may provide an indication to the user that new input parameters may be available in the library and indicate to the user to verify the parameters prior to using them in subsequent projects. In this way, the tool may redundantly verify the models.

If additional variants are needed, then at block 366, the tool may create a sub-assembly group for each variant. Returning to the reheat manifold, for example, the reheat manifold may include four nozzles, six nozzles, or eight nozzles. As such, a sub-group (e.g., sub-assembly group) may be generated for each variant. Additionally, each nozzle may be connected to a pipe of a respective side pipe module. Indeed, multiple variants of the pipe, such as with four connection points, six connection points, or eight connection points, may be generated. In another example, the sub-group may include a piping system which may use additional variants corresponding to a type of pump, a number of pumps, a configuration of the pumps, a positioning of the pumps, and the like. A first sub-group may include a single in-line pump assembly, a second sub-group may include a double in-line pump assembly that may include connections into and out of the pump, and a third sub-group may include the double in-line pump assembly in an alternate configuration. Additionally, or alternatively, the sub-groups may include the pumps connected in parallel or in series.

At determination block 368, a determination of whether any new components may be used is made. For example, a mapping of each sub-group to a respective component with the HRSG may be made to determine if new components may be used. If new components may not be used, then method 350 may return to determination block 362 to determine if additional variants are used. If new components may be used, then the method 350 may return to block 358 to define inputted dimension(s), block 360 to define business logic for calculated dimensions, and determination block 362 to determine if other variations are used.

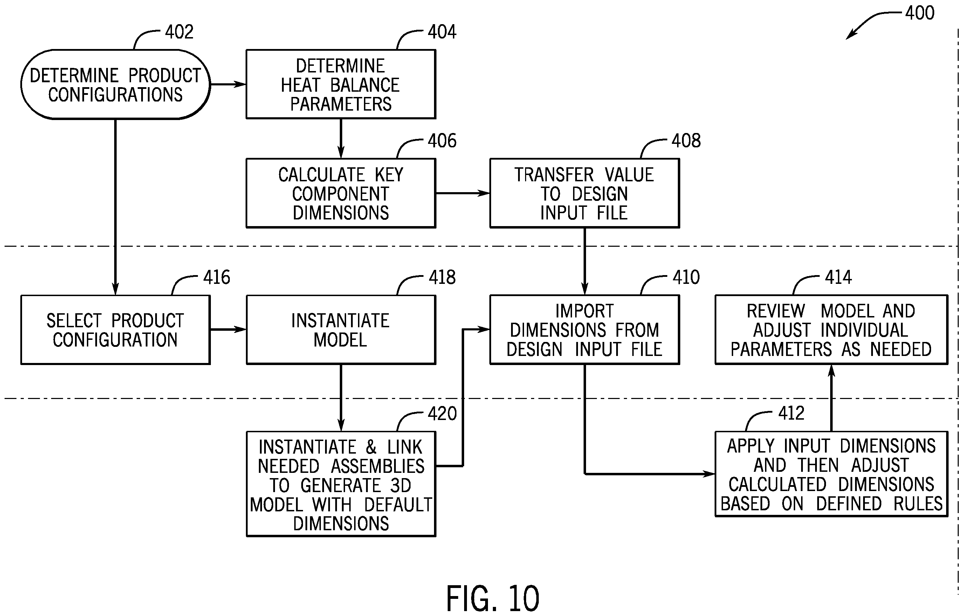

FIG. 10 is a flowchart of an example computer-implemented method 400 for creating the HRSG model 114, 300. The method 400 includes various computer-implemented steps represented by blocks that may be performed by the processor-based device described with respect to FIG. 3 and/or the tool within the CAD software. It should also be noted that the method 400 may be performed by other suitable processor-based devices (e.g., cloud server, webpage, tablet, mobile device, etc.) that may perform the methods described herein. For example, certain steps or portions of the method 400 may be performed by separate systems or devices, such as one or more processors, processor-based devices, and/or computers. Although the flowchart illustrates the steps in a certain sequence, it should be understood that the steps may be performed in any suitable order, and certain steps may be carried out simultaneously, where appropriate.

At block 402, product configurations may be determined, similar to block 352 described with respect to FIG. 9. At block 404, heat balance parameters may be determined. For example, the heat balance parameters may be determined for each component used in the HRSG. Returning to the reheat manifold example, the heat balance parameters may include heat transfer characteristics, flow rate of fluids, pressure, fluid compatibility, temperature limits, and the like.

At block 406, key component dimensions may be calculated. For example, minimum and/or maximum dimensions of key components may be determined, similar to block 354 described with respect to FIG. 9. In another example, one or more dimensions of each component may be selected (e.g., user selection, pre-determined dimensions). Still in another example, a variant of a sub-group may be specified and/or selected for the HSRG model 300.

At block 408, the key component dimensions are transferred to a design input file. For example, the dimensions may be exported from the library and transferred to the tool via the design input file. In another example, the dimensions may be stored in the design input file for subsequent use. That is, the design input file may include the input parameters described with respect to FIG. 3. The design input file may be any suitable digital document, such as an Excel file, a data structure, a text file, a database file (e.g., .accdb, sqlite, .mbd), a CAD file, and so on.

At block 410, the dimensions from the design input file may be imported. For example, the tool may import the key component dimensions from the library to a project work space. The project work space may populate a graphical user interface (GUI) of the design system and be displayed on the processor-based device of the design system. In the project work space, the user may use the tool to create the HRSG model by selecting components from the library, adding additional components, coupling the components and the additional components, adjusting a position of the components, inputting HRSG constraints, and so on.

At block 412, the input dimensions may be applied and adjusted based on defined rules. For example, the user may select one or more components and/or auxiliary modules to form the HRSG model. The tool may determine a dimension for each component based on the dimensions in the design input file. Then, the tool may group the selected components into one or more auxiliary modules and position the auxiliary modules on the base of the HRSG model. For example, the tool may use one or more linked elements (e.g., pipes, valves, fasteners, etc.) to couple the selected components to form an auxiliary module. Additionally, or alternatively, the tool may use relationships between the components, such as mechanical connections, electrical connections, fluid connections, and so on, to couple the components. In certain instances, the tool may adjust one or more input parameters as needed, such as based on the defined rules in the input parameters and/or the business logic. The tool may also couple the auxiliary modules to the base and/or between each other using relationships between the auxiliary modules and/or the base.

At block 414, a model may be reviewed, and individual parameters may be adjusted as needed. The tool may generate the HRSG model in the project work space, and the user may review the model. That is, the HRSG model may be populated in the GUI displayed on the processor-based device for the user to interact with via the tool. For example, the user may use the tool to view different portions of the HRSG model, zoom into or out of different portions of the HRSG model, select components of the HRSG model, and so on. The user may review the configuration of the model, the heat balance parameters of the model, the components within the model, and the like. Additionally, the user may adjust one or more parameters, and the tool may update the HRSG model based on the adjusted parameters. As such, the tool may generate the HRSG model with little user input. If the user validates and accepts the HRSG model, the tool may publish (e.g., export) the HRSG model. For example, the HRSG model may be used to build associated parts and construct the HRSG. Moreover, by modularizing the HRSG, the construction and/or assembly of the HRSG may be simplified, thereby reducing time and resources used to build the HRSG.

As illustrated by FIG. 10, the method 400 may proceed from block 402 corresponding to determining product configurations to block 416 to select a product configuration. In the project work space, for example, the user may create the HRSG model 300 by selecting one or more auxiliary modules, one or more variants of one or more sub-groups, linked elements, connections, and the like. Additionally, or alternatively, the user may select a configuration for the sub-groups and/or the auxiliary modules. The tool may receive the selection from the user and retrieve corresponding input parameters from the library. In certain instances, the tool may display the selections in the project work space for user interactions, such as to generate a 3D model. Additionally, or alternatively, the user may select a previous 3D model stored in the library. The user may add or remove components to and from the 3D model, adjust parameters of the 3D model, and the like. Once loaded into the project work space, the 3D model may no longer be linked back to the model stored in the library to prevent the user from altering parameters of a reference model.

At block 418, an indication to instantiate the model may be received. For example, the user may select a button to instantiate the model created in the project work space.

At block 420, links used to generate the 3D model with default dimensions may be retrieved, and the model may be instantiated. The tool may retrieve connections from the library and use the connections couple the components in the 3D model. The tool may generate an instance of the model created by the user in the project work space. The model may be a smart and intelligent model that may be stored in the library and/or be easily reproduced for subsequent projects. For example, the model may be a complete 3D model of the HRSG with the components coupled together, but without product dimensions. As such, the method 400 may then proceed to block 410 to import dimensions from the design input file, block 412 to apply input dimensions and adjust calculated dimensions based on defined rules, and block 414 receive the model and adjust individual parameters as needed. The method 400 may also publish the model based on the user verifying the model. For example, the published model may be a design file (e.g., CAD file, blueprint) used for constructing the HRSG (e.g., HSRGs 18 described with respect to FIG. 1). As such, the tool may aid in HRSG design and reduce a number of operations performed by the user. In this way, the tool may reduce time and resources used to generate the HRSG model, as well as reducing the likelihood of errors (e.g., misaligned or mis-sized components).

It should be noted that the above-described HSRG model may be used to construct an HRSG. The construction time of the HRSG may also be improved by using the auxiliary modules and/or standardizing the connections between the auxiliary modules and the base of the HRSG. For example, several top platform auxiliary modules and/or side piping modules may be constructed on the ground and may have standardized sizes, shapes, and/or terminal connections used for various HRSG embodiments. That is, the drums, silencers, cable trays, piping, manifolds, and/or terminal connections associated with the top platform auxiliary modules may be installed in the top platform auxiliary modules prior to lifting the top platform auxiliary modules to the top of the base of the HRSG, such that all of the components corresponding to each module may be lifted at once with the corresponding module. Thus, when each top platform auxiliary module is lifted (e.g., via a two-crane technique) to the top of the base of the HRSG, assembly of the top platform auxiliary modules atop the base of the HRSG is simplified relative to traditional embodiments. In this way, time and/or resources used for construction of the HRSG may be reduced.

It should be noted that the above-described HRSG examples include a triple-pressure HRSG having an LP drum, an IP drum, and an HP drum. However, the disclosed modularized top platform auxiliary modules can also be utilized in other types of HRSGs, such as a once-through HRSG. A once-through HRSG may not include an HP drum. For example, in a once-through HRSG, the IP drum and LP drum may be segmented into two separate top platform auxiliary modules, with a third top platform auxiliary module containing a steam manifold. In another once-through HRSG, only two top platform auxiliary modules may be used (e.g., one having a steam manifold, the other having both the IP and LP drums). In still another once-through HRSG, multiple manifolds and/or piping assemblies may include dedicated top platform auxiliary modules (e.g., a first top platform auxiliary module corresponding to a first manifold, and a second top platform auxiliary module corresponding to a second manifold). Thus, it should be appreciated that the above-described examples in FIGS. 1-10, certain of which relating to triple-pressure HRSGs, can also be applied to other types of HRSGs, such as the above-described once-through HRSG.

Technical effects of the disclosure include reducing design time of a HRSG system, simplifying design techniques of the HRSG, and reducing costs to design HRSG system. In particular, the disclosed embodiments modularize the HRSG by grouping components into respective auxiliary modules and standardizes the auxiliary modules. In this way, placement and routing of the components may be constrained to the respective auxiliary module rather than the entire HSRG, which may reduce design complexity and/or construction time of the HRSG. For example, a tool may aid in the design of the HSRG by reducing a number of operations performed by the user, which may reduce time and resources used to design the HRSG.

Furthermore, construction of the HRSG may be simplified since the components may be grouped in the auxiliary modules. For example, the top auxiliary modules may be constructed on the ground and simply lifted onto the base. In another example, the side auxiliary modules may be constructed on the ground, lifted to the side of the base, and coupled to the top auxiliary modules to construct the HRSG. It may be easier to adjust positions of the components, adjust a configuration of the components, swap out components, and/or couple the components when the auxiliary module is on the ground rather than individually placing and routing the components on the base of the HRSG. In this way, the time and resources used to construct the HRSG may be reduced.

The technology discussed herein makes reference to computer-based systems and actions taken by and information sent to and from computer-based systems. One of ordinary skill in the art will recognize that the inherent flexibility of computer-based systems allows for a great variety of possible configurations, combinations, and divisions of tasks and functionality between and among components. For instance, processes discussed herein can be implemented using a single computing device or multiple computing devices working in combination. Databases, memory, instructions, and applications can be implemented on a single system or distributed across multiple systems. Distributed components can operate sequentially or in parallel.

The subject matter described in detail above may be defined by one or more clauses, as set forth below.

A method of designing a heat recovery steam generator (HRSG) includes receiving, via a processor, a design input file comprising a plurality of parameters associated with a plurality of components for an HRSG model and receiving an indication of selecting an object model for a HRSG model. The method may also include retrieving, via the processor and the tool, the object model from a library for populating a graphical user interface (GUI) of a display and generating the HRSG model by applying a first set of parameters corresponding to each component of the object model, wherein the HRSG model corresponds to a design file used to construct the HRSG.

The method of the preceding clause, including publishing, via the processor and the tool, the HRSG model in response to receiving an additional indication of verifying the HRSG model.

The method of any preceding clause, including constructing the HRSG using the design file by constructing the HRSG using the design file by and disposing the first top auxiliary module on a base of the HRSG.

The method of any preceding clause, including retrieving, via the processor and the tool, a base for the HRSG model from the library based on the object model, retrieving, via the processor and the tool, a connection for coupling the object model to the base from the library, and coupling, via the processor and the tool, the object model to the base using the connection.

The method of any preceding clause, including receiving, via the processor and the tool, an additional indication of selecting an additional object model for the HRSG model, retrieving, via the processor and the tool, the additional object model from the library and an additional connection for coupling the additional object model to the base, and updating, via the processor and the tool, the HRSG model by applying a second set of parameters corresponding to each component of the additional object model.

The method of any preceding clause, including receiving, via the processor and the tool, an additional indication to adjust a position of a component within the object model and updating, via the processor and the tool, the object model using the position of the component and the design input file, wherein the design input file comprises layout guidelines of the object model.

The method of any preceding clause, wherein updating, via the processor and the tool, the object model using the position of the component and the design input file includes adjusting the position of the component based on the additional indication and adjusting the position of an additional component within the object model based on the design input file.

The method of any preceding clause, including receiving, via the processor and the tool, an additional indication to add an additional component to the object model, determining, via the processor and the tool, a position of the additional component based on the design input file, and updating, via the processor and the tool, the object model with the additional component.

The method of any preceding clause, including generating, via the processor and the tool, a plurality of components for use within the object model to be stored in the library by determining a maximum dimension and a minimum dimension for each component of the plurality of components, generating a static model for each component using the maximum dimension of each component, and storing the static model in the library.

The method of any preceding clause, including determining via the processor and the tool, a plurality of variants for each component and generating, via the processor and the tool, a respective sub-assembly group for a first component of the plurality of components in response to determining one or more variants for the first component.

The method of any preceding clause, including storing, via the processor and the tool, the first component to the library in response to determining no additional variants for the first component.

The method of any preceding clause, including retrieving, via the processor and the tool, a base of the HRSG model from the library in response to receiving an additional indication of selecting the base, retrieving a linking element from the library based on the connection of the object model and the connection of the base, and coupling the object model and the base using the linking element.

The method of any preceding clause, including receiving, via the processor and the tool, an additional indication to adjust a parameter for a component of the object model and updating, via the processor and the tool, the HRSG model by adjusting the object model by adjusting the parameter for the component.

The method of any preceding clause, including storing, via the processor and the tool, the HRSG model in the library for a subsequent project.

A system for designing a heat recovery steam generator (HRSG) model includes a processor-based device storing or accessing a design application, which when executed by the processor-based device, causes acts to be performed including receiving user input indicative of selecting a tool, wherein the tool, when executed by the processor-based device, causes acts to be performed including receiving an indication of selecting an object model from a library for the HRSG model. The tool, when executed by the processor-based device may also retrieve a base from and an object model from a library, wherein the object model comprises a component, receive a design input file comprising a parameter for the component, and generate the HRSG model by applying the parameter to the component.

The system of the preceding clause, wherein the sampling tool, when generated by the processor-based device, causes acts to be performed including receiving an additional indication to adjust a position of the object model within the HRSG model, identifying a layout principle associated with the object model from the design input file, and adjusting the position of the object model based on the layout principle.

The system of any preceding clause, wherein the sampling tool, when generated by the processor-based device, causes acts to be performed including determining a maximum dimension and a minimum dimension for the component, generating a static model for the component using the maximum dimension of the component, and storing the static model in the library, wherein the static model.

The system of any preceding clause, wherein the sampling tool, when generated by the processor-based device, causes acts to be performed including identifying a connection of the object model and a connection of the base, retrieving a linking element from the library based on the connection of the object model and the connection of the base, and coupling the object model to the base using the linking element.

The system of any preceding clause, wherein the sampling tool, when generated by the processor-based device, causes acts to be performed including storing the HRSG model in the library for a subsequent project.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A method of designing a heat recovery steam generator (HRSG), comprising:
receiving, via a processor, a design input file comprising a plurality of parameters associated with a plurality of components for an HRSG model;
receiving, via the processor and a tool, an indication of selecting an object model for a HRSG model;
retrieving, via the processor and the tool, the object model from a library for populating a graphical user interface (GUI) of a display; and
generating, via the processor and the tool, the HRSG model by applying a first set of parameters corresponding to each component of the object model, wherein the HRSG model corresponds to a design file used to construct the HRSG.

2. The method of claim 1, comprising publishing, via the processor and the tool, the HRSG model in response to receiving an additional indication of verifying the HRSG model.

3. The method of claim 2, comprising constructing the HRSG using the design file by:
forming a first top platform auxiliary module based on the object model; and
disposing the first top auxiliary module on a base of the HRSG.

4. The method of claim 1, comprising:
retrieving, via the processor and the tool, a base for the HRSG model from the library based on the object model;
retrieving, via the processor and the tool, a connection for coupling the object model to the base from the library; and
coupling, via the processor and the tool, the object model to the base using the connection.

5. The method of claim 4, comprising:
receiving, via the processor and the tool, an additional indication of selecting an additional object model for the HRSG model;
retrieving, via the processor and the tool, the additional object model from the library and an additional connection for coupling the additional object model to the base; and
updating, via the processor and the tool, the HRSG model by applying a second set of parameters corresponding to each component of the additional object model.

6. The method of claim 1, comprising:
receiving, via the processor and the tool, an additional indication to adjust a position of a component within the object model; and
updating, via the processor and the tool, the object model using the position of the component and the design input file, wherein the design input file comprises layout guidelines of the object model.

7. The method of claim 1, comprising generating, via the processor and the tool, a plurality of components for use within the object model to be stored in the library by:
determining a maximum dimension and a minimum dimension for each component of the plurality of components;
generating a static model for the each component of the plurality of components using the maximum dimension of the each component; and
storing the static model in the library.

8. The method of claim 7, comprising:
determining, via the processor and the tool, a plurality of variants for a first component of the plurality of components; and
generating, via the processor and the tool, a respective sub-assembly group for a first component of the plurality of components in response to determining the plurality of variants for the first component.

9. The method of claim 8, comprising storing, via the processor and the tool, the first component to the library in response to determining no additional variants for the first component.

10. The method of claim 1, comprising:
retrieving, via the processor and the tool, a base of the HRSG model from the library in response to receiving an additional indication of selecting the base;
retrieving, via the processor and the tool, a linking element from the library based on the connection of the object model and the connection of the base;
coupling, via the processor and the tool, the object model and the base using the linking element.

11. A system for designing a heat recovery steam generator (HRSG) model, comprising:
a processor-based device storing or accessing a design application, which when executed by the processor-based device, causes acts to be performed comprising:
receiving user input indicative of selecting a tool, wherein the tool, when executed by the processor-based device, causes acts to be performed comprising:
receiving an indication of selecting an object model from a library for the HRSG model;
retrieving, from the library, a base model and the object model from a library, wherein the object model comprises a component;
receiving a design input file comprising a parameter for the component; and
generating the HRSG model by applying the parameter to the component.

12. The system of claim 11, wherein the tool, when generated by the processor-based device, causes acts to be performed comprising:
receiving an additional indication to adjust a position of the object model within the HRSG model; and
identifying a layout principle associated with the object model from the design input file; and
adjusting the position of the object model based on the layout principle.

13. The system of claim 11, wherein the tool, when generated by the processor-based device, causes acts to be performed comprising:
determining a maximum dimension and a minimum dimension for the component;
generating a static model for the component using the maximum dimension of the component; and
storing the static model in the library.

14. The system of claim 11, wherein the tool, when generated by the processor-based device, causes acts to be performed comprising:
identifying a connection of the object model and a connection of the base model;
retrieving a linking element from the library based on the connection of the object model and the connection of the base model; and
coupling the object model to the base model using the linking element.

15. The system of claim 11, wherein the tool, when generated by the processor-based device, causes acts to be performed comprising:
storing the HRSG model in the library for a subsequent project.
